# EUROPÄISCHE PATENTSCHRIFT

(11) **EP 3 593 096 B1**
(45) Veröffentlichungstag und Bekanntmachung des Hinweises auf die Patenterteilung: **16.11.2022**
(21) Anmeldenummer: 18709352.1
(22) Anmeldetag: 07.03.2018
(51) Int. Cl.: G01F 23/00, B67C 3/00, B67D 1/08

(54) **VORRICHTUNG ZUM BESTIMMEN DES FÜLLSTANDES EINES FÜLLPRODUKTS IN EINEM FÜLLPRODUKTRESERVOIR**
DEVICE FOR DETERMINING THE FILLING LEVEL OF A FILLING PRODUCT IN A FILLING PRODUCT RESERVOIR
DISPOSITIF POUR DÉTERMINER LE NIVEAU DE REMPLISSAGE D'UN PRODUIT DE REMPLISSAGE DANS UN RÉSERVOIR

(30) Priorität: 07.03.2017 DE 102017104696
(43) Veröffentlichungstag der Anmeldung: 15.01.2020
(73) Patentinhaber: Krones AG, 93073 Neutraubling (DE)
(72) Erfinder: ZIEGLER, Manfred, 93073 Neutraubling (DE)
(74) Vertreter: Nordmeyer, Philipp Werner
(86) Internationale Anmeldenummer: PCT/EP2018/055583
(87) Internationale Veröffentlichungsnummer: WO 2018/162541

(56) Entgegenhaltungen:
- EP-A1- 0 327 958
- EP-A1- 2 930 139
- DE-A1- 19 741 067
- DE-A1-102012 021 762
- FR-A1- 2 448 130
- FR-A1- 2 798 464
- US-A- 5 157 968
- US-A- 5 315 873
- US-A- 5 479 820
- US-A1- 2003 217 596
- US-A1- 2004 050 157
- MELUGO: "Rundstab V2A aus Vollmaterial", , 31 December 2016 (2016-12-31), XP055738601, Retrieved from the Internet: URL:https://melugo.de/Gelaender-und-Bautei le/Einzelteile/Rohre-Profile-und-Vollmater ial/Vollmaterial/Rundstab-V2A-aus-Vollmate rial-Laenge-3-m.html [retrieved on 2020-10-12]
- Dreckshage: "Lebensmittelindustrie - Werkstoffe und Komponenten", , 19 July 2013 (2013-07-19), XP055807879, Retrieved from the Internet: URL:https://www.dreckshage.de/sites/defaul t/files/kataloge/pdf/Lebensmittelindustrie _0.pdf [retrieved on 2021-05-26]

## Beschreibung

### Technisches Gebiet

Die vorliegende Erfindung betrifft eine Vorrichtung zum Bestimmen des Füllstandes eines Füllprodukts in einem Füllproduktreservoir in einer Füllproduktabfüllanlage, beispielsweise einer Getränkeabfüllanlage zum Abfüllen eines Getränks in einen Behälter. Die Vorrichtung zum Bestimmen des Füllstandes kann in einer Getränkeabfüllanlage beispielsweise in einem Füllproduktreservoir beispielsweise in Form eines Vorlagekessels, eines Beistelltanks oder einer Füllproduktdosierkammer zum Vordosieren eines Füllprodukts vor dessen Einströmen in den zu befüllenden Behälter vorgesehen sein.

### Stand der Technik

Zur Bestimmung des Füllstandes eines Füllprodukts in einem Füllproduktreservoir einer Getränkeabfüllanlage ist es bekannt, Füllstände in Füllproduktreservoirs beispielsweise über kapazitive Sonden zu bestimmen, mit denen das jeweilige Füllproduktniveau quasi stufenlos bestimmt werden kann. Damit das Füllproduktniveau mit der kapazitiven Sonde jedoch genau bestimmt werden kann, ist die genaue Kenntnis der Eigenschaften des jeweiligen Füllprodukts und insbesondere die Kenntnis der Permitivität beziehungsweise der Dielektrizitätszahl des jeweiligen Füllprodukts von zentraler Bedeutung. Eine exakte Bestimmung der Füllhöhe kann nur bei genauer Kenntnis der Eigenschaften des jeweiligen Füllprodukts vorgenommen werden. Dies ist insbesondere bei pastösen oder hochviskosen Produkten oder bei Füllprodukten, welche Feststücke - beispielsweise in Form von Stückchen oder Pulpen in Fruchtsäften - umfassen, nur schwierig zu erreichen.

Weiterhin ist es bekannt, Füllhöhen beispielsweise über resistive Sonden zu bestimmen. Insbesondere bei einer Reinigung mittels Spritz- und Sprühverfahren der jeweiligen Vorrichtung kann es dabei während der Reinigung zu einem Sondenkurzschluss kommen, welcher dann zu Ungenauigkeiten im nachfolgenden Messverfahren führen kann.

Ferner ist es bekannt, die Messung des Füllstands mittels freistrahlender oder geführter Mikrowellensensoren bzw. Radarsonden durchzuführen. Diese Technologie benötigt ein Freifeld, so dass die vom jeweiligen Strahler emittierten Mikrowellen durch einen im Wesentlichen homogenen und gasförmigen Bereich auf die jeweils zu messende Flüssigkeitsoberfläche auftreffen müssen, um eine genaue Messung zu ermöglichen. Damit ist ein Einbau am Boden des jeweiligen Gefäßes nicht möglich und eine Messung während eines Reinigungsvorgangs, bei dem ein großer Anteil an Sprühnebel vorliegt, nicht zuverlässig möglich.

Weiterhin ist es allgemein im Stand der Technik bekannt, den jeweiligen Füllstand der Flüssigkeit mittels Auftriebskörpern, welche teilweise in die jeweils zu messende Flüssigkeit eintauchen, zu bestimmen. Beispielsweise ist aus der EP 0 604 670 A1 eine Vorrichtung zum Messen des Pegelstandes eines flüssigen Mediums in einem Behälter bekannt, bei welcher der Auftrieb eines in die Flüssigkeit eintauchenden Auftriebskörpers auf einen Kopplungsstab übertragen wird, dessen Verbiegung gemessen wird. Aus der pegelstandsabhängigen Verbiegung des Kopplungsstabs kann das jeweilige Füllniveau bestimmt werden.

Die US 5,157,968 A beschreibt eine Vorrichtung zum Messen des spezifischen Gewichts, des Gewichts, des Füllstands und/oder des Volumens einer Flüssigkeit in einem Behälter. Die Vorrichtung umfasst einen zylindrischen Tauchkörper.

Diese Vorrichtungen gemäß dem Stand der Technik sind für eine Abfüllvorrichtung, und insbesondere eine Getränkeabfüllvorrichtung, an welche hohe Anforderungen bezüglich der Hygiene gestellt werden, nicht geeignet, da aufgrund der vielteiligen Ausbildung ein hygienisches Design nicht bereitgestellt werden kann.

### Darstellung der Erfindung

Ausgehend von dem bekannten Stand der Technik ist es eine Aufgabe der vorliegenden Erfindung, eine alternative Vorrichtung zum Bestimmen des Füllstandes eines Füllprodukts anzugeben, welche sich zur Verwendung in der Lebensmittelindustrie eignet.

Diese Aufgabe wird durch eine Vorrichtung zum Bestimmen des Füllstandes eines Füllprodukts in einem Füllproduktreservoir mit den Merkmalen des Anspruchs 1 gelöst. Vorteilhafte Weiterbildungen ergeben sich aus den Unteransprüchen, der Beschreibung sowie den Figuren.

Entsprechend wird eine Vorrichtung zum Bestimmen des Füllstandes eines Füllprodukts in einem Füllproduktreservoir einer Füllproduktabfüllanlage, bevorzugt einem Getränkereservoir in einer Getränkeabfüllanlage, vorgeschlagen, umfassend einen im Füllproduktreservoir angeordneten Tauchkörper zum Eintauchen in das Füllprodukt und eine mit dem Tauchkörper verbundene Kraftmesszelle zum Bestimmen der auf den Tauchkörper wirkenden Gewichtskraft. Erfindungsgemäß ist der Tauchkörper vollständig aus einem Vollmaterial ausgebildet.

Die Kraftmesszelle ist bevorzugt als Wägezelle ausgebildet, so dass die auf den Tauchkörper wirkende Gewichtskraft zu jedem Zeitpunkt auf einfache Weise bestimmt werden kann. Bei der Ausbildung als reine Kraftmesszelle ist eine entsprechende Auswertung vonnöten, mittels derer die auf den Tauchkörper wirkende Gewichtskraft ermittelt werden kann.

Dadurch, dass der Tauchkörper vollständig aus dem Vollmaterial ausgebildet ist, kann der Tauchkörper mit einem besonders hygienischen Design ausgebildet werden, da insbesondere Toträume in dem Tauchkörper nicht vorliegen. Damit ist eine hygienische Ausbildung der Vorrichtung möglich, welche einen Einsatz in der Lebensmittelindustrie ermöglicht. Weiterhin kann durch die Abwesenheit von Toträumen eine FDA- beziehungsweise EHEDG-Zulassung erhalten werden und damit die Vorrichtung auch bei der Abfüllung pharmazeutischer Produkte eingesetzt werden.

Mit anderen Worten kann die Vorrichtung durch den Vollmaterialtauchkörper hygienisch vollkommen unbedenklich gestaltet werden.

Unter der auf den Tauchkörper wirkenden Gewichtskraft, die von der Kraftmesszelle bestimmt wird, wird hierin die Gewichtskraft verstanden, die vom Tauchkörper auf die Kraftmesszelle ausgeübt wird. Im Vakuum entspräche die Gewichtskraft gleich dem Gewicht des Tauchkörpers. In einem Medium hingegen entspricht die Gewichtskraft dem Gewicht des Tauchkörpers vermindert um den Auftrieb des verdrängten Mediums nach dem archimedischen Prinzip. Die Kraftmesszelle misst entsprechend nur die um den Auftrieb verminderte Gewichtskraft des Tauchkörpers.

Bevorzugt kann der Tauchkörper vollständig aus Edelstahl oder einem lebensmittelechten Kunststoff ausgebildet sein, um die hygienische Ausgestaltung des Tauchkörpers auch von der Materialseite her zu unterstützen.

Der Tauchkörper selbst kann bevorzugt ein hygienisches Design aufweisen und besonders bevorzugt glatte und/oder abgerundete und/oder konvexe Oberflächen aufweisen. Durch eine solche Gestaltung des Tauchkörpers kann vermieden werden, dass sich Füllproduktmengen oder Fremdkörper auf oder an dem Tauchkörper ansammeln oder stauen und auf diese Weise einen Nährboden für Keime bilden. Durch die vorgeschlagene Ausgestaltung des Tauchkörpers kann die Vorrichtung bei Reinigungs-, Desinfektions- und/oder Sterilisationsprozessen zuverlässig behandelt werden und die jeweils verwendeten Reinigungs- oder Desinfektionsmedien nach dem Abschluss des Reinigungs- oder Desinfektionsvorgang wieder vollständig entfernt werden.

Weiterhin kann durch die Verwendung des Auftriebskörpers aus Vollmaterial in Kombination mit der Kraftmesszelle eine Vorrichtung zum Bestimmen des Füllstandes angegeben werden, welche vollkommen unabhängig von der Dielektrizitätszahl beziehungsweise Permitivität beziehungsweise von Variationen der Dielektrizitätszahl oder Permitivität des jeweiligen Füllprodukts eine zuverlässige Messung des jeweiligen Füllstandes ermöglicht.

Bevorzugt ist die Kraftmesszelle fluiddicht gekapselt und in das Füllprodukt eintauchbar. Auf diese Weise kann die Vorrichtung vollständig in dem Füllproduktreservoir aufgenommen werden, so dass die Positionierung der Vorrichtung anhand der jeweiligen geometrischen Gegebenheiten innerhalb des Füllproduktreservoirs einfach vorgenommen werden kann. Auf die geometrischen Gegebenheiten außerhalb des Füllproduktreservoirs muss entsprechend keine Rücksicht genommen werden, so dass ein einfacher Anlagenaufbau resultiert. Innerhalb des Füllproduktreservoirs kann hingegen eine beliebige Positionierung vorgenommen werden.

Auf diese Weise kann weiterhin ein sehr flexibler Einbau der Vorrichtung zum Bestimmen des Füllstandes erreicht werden, wobei beispielsweise der Tauchkörper gemeinsam mit der Kraftmesszelle innerhalb des Füllproduktreservoirs angeordnet sein kann und zusammen mit dem Tauchkörper teilweise oder vollständig von dem Füllprodukt überflutet beziehungsweise umspült werden kann.

Auf diese Weise ist es auch möglich, ein besonders hygienisches Design dahingehend bereitzustellen, dass eine separate Kammer für die Kraftmesszelle nicht notwendig ist. In einer bevorzugten Ausbildung ist auch eine Durchbrechung der das Füllproduktreservoir definierenden Wand nicht notwendig. Vielmehr kann die Kraftmesszelle gemeinsam mit dem Tauchkörper im jeweiligen Füllproduktreservoir aufgenommen werden und auf diese Weise zusammen mit dem Füllproduktreservoir und den übrigen Komponenten den Reinigungsverfahren und Sterilisationsverfahren der Getränkeabfüllanlage unterworfen werden.

In einer alternativen Ausbildung steht die Kraftmesszelle über eine Durchbrechung der das Füllproduktreservoir definierenden Wand in Fluidkommunikation mit der Umgebung, so dass die in der Kraftmesszelle vorliegenden Volumina mit der Umgebung in Fluidkommunikation stehen und die Vorrichtung damit nicht unter die Druckgeräterichtlinie fällt. Die Durchbrechung kann in Form einer Kapillare ausgebildet sein.

Durch eine Befüllung des jeweiligen Füllproduktreservoirs von dem nicht befüllten Zustand bis zu einem vollständigen Eintauchen des Tauchkörpers in das jeweilige Füllprodukt kann eine Kalibrierung der Vorrichtung vorgenommen werden, ohne dass die genauen Eigenschaften, beispielsweise die Dichte, des jeweiligen Füllprodukts genau bekannt sein müssen. Allein aus der Geometrie des Tauchkörpers lässt sich auf diese Weise genau das Verhalten des Tauchkörpers beim sukzessiven Eintauchen in das Füllprodukt bestimmen. Die Auswertevorrichtung ist bevorzugt dazu eingerichtet, die Kalibrierung auf diese Weise durchzuführen.

Ist die Dichte des Füllprodukts bekannt, kann auch eine Kalibrierung der Vorrichtung gegen Luft, also bei unbefülltem Füllproduktreservoir, vorgenommen werden. Dabei wird zunächst die auf den Tauchkörper wirkende Gewichtskraft ohne die Einwirkung eines Füllprodukts gemessen und davon ausgehend kann dann der Füllstand aufgrund der genauen Kenntnis der Geometrie des Tauchkörpers aus der jeweiligen Reduktion der auf den Füllkörper wirkenden Gewichtskraft ermittelt werden. Die Dichte des Füllprodukts kann für eine große Anzahl an ähnlichen Füllprodukten als wasserähnlich eingeschätzt werden. Die Auswertevorrichtung ist bevorzugt dazu eingerichtet, die Kalibrierung auf diese Weise durchzuführen.

Der Tauchkörper ist bevorzugt starr an der Kraftmesszelle angebunden und der Tauchkörper ist besonders bevorzugt über einen starren Stab mit der Kraftmesszelle verbunden. Damit kann die Kraftmesszelle an einer Seitenwand des jeweiligen Füllproduktreservoirs oder gar am Boden des jeweiligen Füllproduktreservoirs angebunden sein und die gewünschte Ausrichtung des Tauchkörpers kann dennoch erreicht werden. Mit anderen Worten kann es vorgesehen sein, dass die Kraftmesszelle und der Tauchkörper am Boden des Füllproduktreservoirs angeordnet sind, die Kraftmesszelle entsprechend beim Vorliegen von Füllprodukt im Füllprodukt liegt und der Tauchkörper sich in das Füllproduktreservoir hinein erstreckt.

Besonders bevorzugt hält der starre Stab den Tauchkörper in einer vorgegebenen Ausrichtung und der Tauchkörper ist zumindest teilweise, besonders bevorzugt vollständig, oberhalb der Kraftmesszelle gehalten.

Auf diese Weise lässt sich eine besonders kompakte Ausgestaltung eines Füllproduktreservoirs ausbilden, da die Vorrichtung zum Bestimmen des Füllstandes innerhalb des Reservoirs beziehungsweise innerhalb der Dosierkammer angeordnet sein kann und entsprechend periphere Sensoren und Messvorrichtungen an dem Reservoir beziehungsweise der Kammer vermieden werden können.

Ferner ist eine Auswertevorrichtung vorgesehen, welche ein Füllstandssignal auf Grundlage der von der Kraftmesszelle ermittelten Gewichtskraft bestimmt.

Besonders bevorzugt ist die Auswerteeinrichtung dazu eingerichtet, die Daten eines Temperatursensors zur Bestimmung der Temperatur der Kraftmesszelle und/oder des Füllprodukts, und/oder die Daten eines Drucksensors zur Bestimmung des über dem Füllprodukt im Füllproduktreservoir anliegenden Drucks in die Bestimmung des Füllstandssignals einzubeziehen. Auf diese Weise kann das Füllstandssignal noch exakter ermittelt werden.

Weiter ist die Auswerteeinrichtung dazu eingerichtet, auf Grundlage des Signals eines Voll-Sensors, welcher ermittelt, ob der Tauchkörper vollständig in das Füllprodukt eingetaucht ist, und/oder auf Grundlage des Signals eines Leer-Sensors, welcher ermittelt, ob der Tauchkörper nicht in das Füllprodukt eingetaucht ist, das Füllstandssignal zu kalibrieren.

Damit kann beispielsweise eine Kompensation des gemessenen Wägesignals auf Grundlage von in dem jeweiligen Reservoir gemessenen Druckbedingungen beziehungsweise eine Temperaturkompensation über eine Temperatursonde erreicht werden. Die Auswertevorrichtung gibt entsprechend an eine übergeordnete Vorrichtung ein Messsignal, bevorzugt ein temperaturkompensiertes und/oder druckkompensiertes Messsignal, so weiter, dass eine übergeordnete Steuerung den Füllstand korrekt übergeben bekommt und auf dieser Grundlage die Füllproduktabfüllanlage steuern kann.

Es ist ein weiterer Sensor vorhanden, welcher das Erreichen beziehungsweise Überschreiten des vollständigen Eintauchens des Tauchkörpers ermittelt, um auf diese Weise der Auswertevorrichtung bei einem Leerabgleich und Vollabgleich das entsprechende "voll" zu liefern, um auf diese Weise eine Kalibrierung der Vorrichtung zur Bestimmung des Füllstandes durch einen einfachen Leer-/Voll-Abgleich zu ermöglichen. Der entsprechende Sensor zur Ermittlung des vollständigen Eintauchens des Tauchkörpers kann entweder an einer Innenwand des Füllproduktreservoirs oder der Füllproduktdosierkammer vorgesehen sein, oder aber an der jeweiligen Oberseite des Tauchkörpers und/oder an einer Anbindung des Tauchkörpers an die Kraftmesszelle, beispielsweise an einer starren Stange, welche die Kraftmesszelle mit dem Tauchkörper verbindet, vorgesehen sein. Auf diese Weise lässt sich eine kompakte Vorrichtung zur Bestimmung des Füllstandes bereitstellen, welche auch eine Kalibrierung der Vorrichtung unabhängig vom jeweiligen Füllprodukt ermöglicht, und aufgrund der Kalibrierungsdaten mittels der Auswerteeinheit an eine übergeordnete Steuerung stets und unabhängig von dem jeweiligen Füllprodukt temperaturkompensierte, druckkompensierte und füllprodukteigenschaftskompensierte Messdaten liefern. Mit anderen Worten kann auf diese Weise ein exaktes Messergebnis geliefert werden.

### Kurze Beschreibung der Figuren

Bevorzugte weitere Ausführungsformen der Erfindung werden durch die nachfolgende Beschreibung der Figuren näher erläutert. Dabei zeigen:

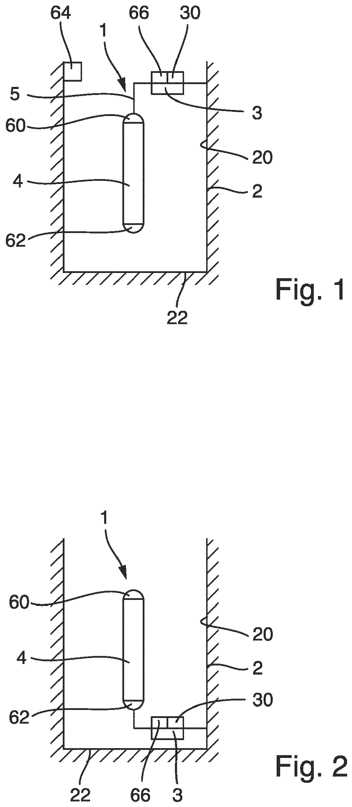

- Figur 1: eine schematische Schnittdarstellung eines Füllproduktreservoirs einer Füllproduktabfüllvorrichtung, in welchem eine Vorrichtung zum Bestimmen der Füllstandshöhe des Füllprodukts vorgesehen ist, dessen Kraftmesszelle an einer Seitenwand des Füllproduktreservoirs angebunden ist;
- Figur 2: eine schematische Schnittdarstellung eines weiteren Füllproduktreservoirs einer Füllproduktabfüllvorrichtung, in welchem eine Vorrichtung zum Bestimmen der Füllstandshöhe des Füllprodukts vorgesehen ist, dessen Kraftmesszelle an einer Seitenwand des Füllproduktreservoirs angebunden ist;

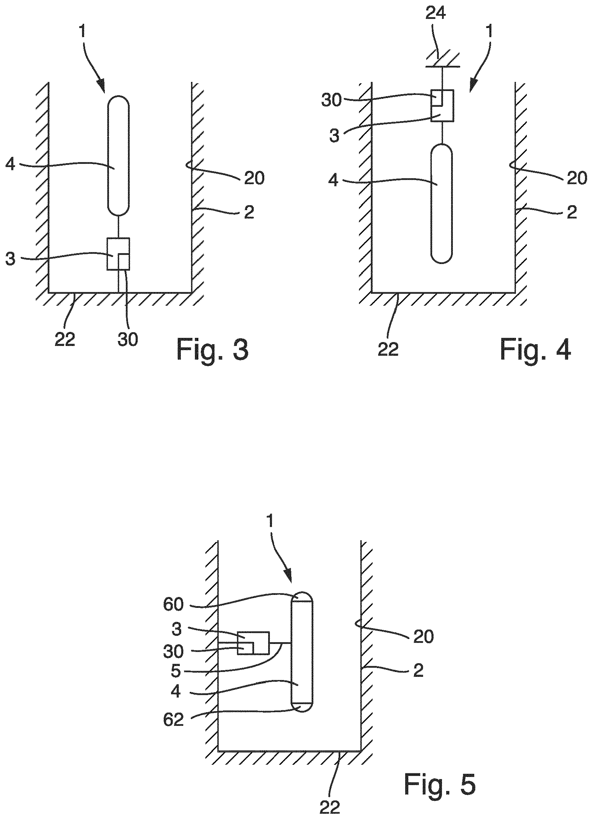

- Figur 3: eine weitere schematische Schnittdarstellung eines Füllproduktreservoirs einer Füllproduktabfüllvorrichtung, in welchem eine Vorrichtung zum Bestimmen der Füllstandshöhe des Füllprodukts vorgesehen ist, dessen Kraftmesszelle am Boden des Füllproduktreservoirs angeordnet ist, so dass deren Tauchkörper vom Boden aus in das Füllproduktreservoir hineinsteht;
- Figur 4: eine weitere schematische Schnittdarstellung eines Füllproduktreservoirs einer Füllproduktabfüllvorrichtung, in welchem eine Vorrichtung zum Bestimmen der Füllstandshöhe des Füllprodukts vorgesehen ist, dessen Kraftmesszelle am Deckel des Füllproduktreservoirs angeordnet ist, so dass sich der Tauchkörper vom Deckel in das Füllproduktreservoir herab erstreckt; und
- Figur 5: eine weitere schematische Schnittdarstellung eines Füllproduktreservoirs einer Füllproduktabfüllvorrichtung, in welchem eine Vorrichtung zum Bestimmen der Füllstandshöhe des Füllprodukts vorgesehen ist, dessen Kraftmesszelle an einer Seitenwand des Füllproduktreservoirs angeordnet ist, wobei die Kraftmesszelle mittig mit dem Tauchkörper verbunden ist.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

In Figur 1 ist eine schematische und exemplarische Schnittdarstellung eines Füllproduktreservoirs 2, in welchem eine Vorrichtung 1 zum Bestimmen des Füllstandes eines hier nicht eingezeichneten Füllprodukts angeordnet ist. Das Füllproduktreservoir 2 kann beispielsweise ein Vorlagekessel einer Füllproduktabfüllanlage sein, in welchem das Füllprodukt zwischengelagert wird, bevor es den jeweiligen Füllventilen zum Befüllen der zu befüllenden Behälter zugeführt wird. Das Füllproduktreservoir 2 kann auch ein beigestellter Füllprodukttank in einer Füllproduktabfüllanlage sein. Das Füllproduktreservoir 2 kann weiterhin auch in Form einer Füllproduktdosierkammer in einer Füllproduktabfüllanlage vorgesehen sein, wobei in der Füllproduktdosierkammer die in den zu befüllenden Behälter einzufüllende Füllproduktmenge zunächst abgemessen wird, um dann direkt, üblicherweise ohne weitere Regelung, in den zu befüllenden Behälter eingeleitet zu werden. Das Füllproduktreservoir 2 kann aber auch weitere, hier nicht genannte Funktionen übernehmen, bei denen die Kenntnis des Füllstands des Füllprodukts im Füllproduktreservoir 2 von Bedeutung ist. Die in dem Füllproduktreservoir 2 aufgenommene Vorrichtung 1 zum Bestimmen des Füllstandes umfasst eine Kraftmesszelle 3, welche mit einem Tauchkörper 4 so verbunden ist, dass die Kraftmesszelle 3 die auf den Tauchkörper 4 wirkende Gewichtskraft bestimmen kann.

Das vorliegende Messprinzip basiert auf dem archimedischen Prinzip und berücksichtigt, dass der Tauchkörper 4 einen Auftrieb erfährt, sobald er in das Füllprodukt eintaucht. Entsprechend kann die Eintauchtiefe des Tauchkörpers 4 auf Grundlage der Gewichtskraft, welche von dem Tauchkörper 4 auf die Kraftmesszelle 3 wirkt, bestimmt werden und auf diese Weise auf den Füllstand des Füllprodukts im Füllproduktreservoir 2 geschlossen werden.

Dazu wird für ein mögliches erstes Vorgehen zunächst die auf die Kraftmesszelle 3 wirkende Gewichtskraft des Tauchkörpers 4 eines sich nicht in dem Füllprodukt befindlichen Tauchkörpers 4, also einem in Luft vorliegenden Tauchkörper 4, gemessen. Die auf diese Weise bestimmte Gewichtskraft entspricht einem Füllstand unterhalb des Tauchkörpers 4, so dass der Tauchkörper 4 nicht mit dem Füllprodukt in Berührung steht. Bei steigendem Füllstand des Füllprodukts taucht der Tauchkörper 4 nach und nach in das Füllprodukt ein, so dass sich eine Veränderung der auf die Kraftmesszelle 3 wirkenden Gewichtskraft aufgrund des Auftriebes des Tauchkörpers 4 ergibt. Aufgrund der Veränderung der auf den Tauchkörper 4 wirkenden Gewichtskraft durch das Einströmen des Füllprodukts in das Füllproduktreservoir 2 kann entsprechend auf die Füllhöhe geschlossen werden.

Dabei ist es zur genauen Kalibrierung entweder notwendig, die Dichte des Füllproduktes zu kennen, um auf Grundlage der Kenntnis der Geometrie des Tauchkörpers 4 und der Reduktion der Gewichtskraft, welche von der Kraftmesszelle 3 detektiert wird, auf die Eintauchtiefe des Tauchkörpers 4 zu schließen.

Ohne genaue Kenntnis der Dichte des Füllprodukts ist es jedoch ebenfalls möglich, eine Kalibrierung dadurch vorzunehmen, dass zunächst die auf die Kraftmesszelle 3 wirkende Gewichtskraft des Tauchkörpers 4 in Luft gemessen wird, und dann die Gewichtskraft des vollständig eingetauchten Tauchkörpers 4 gemessen wird. Aus der Kenntnis dieser beiden Werte und der genauen Kenntnis der Geometrie des Tauchkörpers 4 ist entsprechend ebenfalls eine genaue Kalibrierung vorzunehmen. Es kann dann aus der Veränderung der über die Kraftmesszelle 3 bestimmten Gewichtskraft entsprechend exakt auf den Füllstand in dem Füllproduktreservoir 2 geschlossen werden.

Um ein hygienisches Design zu gewährleisten und auf diese Weise eine Verwendung der Vorrichtung 1 zum Bestimmen des Füllstandes in einer Getränkeabfüllanlage beziehungsweise in anderen Lebensmittel beziehungsweise pharmazeutische Produkte abfüllenden Füllproduktabfüllanlagen vorzusehen, ist das gesamte Volumen des Tauchkörpers vollständig aus einem Vollmaterial ausgebildet.

Der Vollmaterialtauchkörper 4 weist entsprechend keinerlei Totraum auf, in welchem sich hygienisch bedenkliche Materialien ansammeln könnten. Der Tauchkörper 4 ist durch die Ausbildung aus einem Vollmaterial entsprechend hygienisch einwandfrei ausbildbar, da keine Toträume entstehen können. Durch die Abwesenheit von Toträumen wird weiterhin auch vermieden, dass der Tauchkörper den Regelungen der Druckgeräterichtlinie unterfällt. Weiterhin kann durch die Ausbildung eines hygienischen Designs und insbesondere durch die Ausbildung der äußeren Oberflächen des Tauchkörpers 4 derart, dass diese glatt und ohne Hinterschnitt ausgeführt sind und bevorzugt konvex sind, erreicht werden, dass Flüssigkeiten und Keime sich nicht darauf ablagern können. Diese Materialien können auch mittels Reinigungsverfahren einfach abgereinigt werden, so dass eine hygienisch einwandfreie Vorrichtung 1 bereitgestellt werden kann.

In dem in Figur 1 gezeigten Ausführungsbeispiel weist das Füllproduktreservoir Seitenwände 20 und einen Boden 22 auf. Die Kraftmesszelle 3, welche über einen Verbindungsstab 5 starr mit dem Tauchkörper 4 verbunden ist, ist an einer Seitenwand 20 des Füllproduktreservoirs 2 angebunden.

In der Kraftmesszelle 3 ist bevorzugt eine Auswerteeinrichtung 30 vorgesehen, mittels welcher eine Auswertung der durch die Kraftmesszelle 3 ermittelten Daten zumindest dahingehend durchgeführt werden kann, dass diese Daten an eine übergeordnete Steuereinheit übergeben werden können.

Besonders bevorzugt ist die Auswerteeinrichtung 30 so ausgebildet, dass sie sowohl einen Leerabgleich, als auch einen Vollabgleich durchführen kann.

Hierzu ist bevorzugt ein Voll-Sensor 60 vorgesehen, welcher beispielsweise in Form eines resistiven Sensors ausgebildet sein kann, der im oberen Bereich des Tauchkörpers 4 angeordnet ist und mittels welchem bestimmt werden kann, ob im oberen Bereich des Tauchkörpers 4 Füllprodukt vorliegt. Mit anderen Worten kann mittels des Voll-Sensors 60 festgestellt werden, ob der Tauchkörper 4 vollständig mit Füllprodukt bedeckt ist, oder ob der obere Bereich des Tauchkörpers 4 noch aus dem Füllprodukt herausschaut. Entsprechend kann die Auswerteeinrichtung 30 aufgrund des Voll-Sensors 60 erkennen, wenn der Tauchkörper 4 vollständig mit Füllprodukt bedeckt ist und auf diese Weise eine Kalibrierung der Vorrichtung 1 vornehmen.

In einer besonders bevorzugten Ausführungsform ist auch ein Leer-Sensor 62 vorgesehen, welcher am untersten Ende des Tauchkörpers 4 vorgesehen ist und mittels welchem die Auswerteeinrichtung 30 ermitteln kann, ob der Tauchkörper 4 bereits in das Füllprodukt eingetaucht ist.

Entsprechend kann eine Kalibrierung der Vorrichtung 1 dadurch durchgeführt werden, dass die Auswerteeinrichtung 30 die Veränderung der auf den Tauchkörper 4 wirkenden Gewichtskraft von einem Zustand, in welchem der Leer-Sensor 62 meldet, dass der Tauchkörper 4 noch nicht im Füllprodukt eingetaucht ist, bis hin zu einem Zustand, in welchem der Voll-Sensor 60 meldet, dass der Tauchkörper 4 vollständig in dem Füllprodukt eingetaucht ist. Der zwischen diesen Marken vorliegende Gewichtkraftverlauf ermöglicht bei einer genauen Kenntnis der Geometrie des Tauchkörpers 4 eine Kalibrierung, so dass auf diese Weise ohne die Kenntnis der Permitivität des Füllprodukts beziehungsweise ohne Kenntnis der Dichte des Füllprodukts jederzeit eine korrekte Angabe des Füllstandes innerhalb des Füllproduktreservoirs 2 ermöglicht wird.

In einem weiteren Schritt kann in der Auswerteeinrichtung 30 mittels dieses Kalibrierverfahrens auch die Dichte des jeweiligen Füllprodukts bestimmt werden.

Die genaue Bestimmung der Füllprodukthöhe ist naturgemäß nur zwischen dem untersten Teil des Tauchkörpers 4, bei dem der Tauchkörper 4 gerade nicht in das Füllprodukt eintaucht, und dem obersten Teil des Tauchkörpers 4, bei welchem der Tauchkörper 4 gerade mit Füllprodukt bedeckt ist, ausgeführt werden. In diesem Bereich ist eine genaue Bestimmung des Füllstandes innerhalb des Füllproduktreservoirs 2 möglich.

Bevorzugt ist weiterhin neben dem Voll-Sensor 60 und dem Leer-Sensor 62 auch ein Drucksensor 64 vorgesehen, mittels welchem der über dem Füllprodukt lastende Druck bestimmt werden kann, um auf diese Weise innerhalb der Auswerteeinrichtung 30 nach Übermittlung des entsprechenden Druckwertes eine Kompensation für den auf den Tauchkörper 4 wirkenden Luftdruck beziehungsweise Gasdruck, welcher vom Drucksensor 64 bestimmt wird, zu ermöglichen. Eine Schwankung des Gasdrucks, welcher auf einen teilweise in das Füllprodukt eingetauchten Tauchkörper 4 wirkt, kann nämlich ebenfalls zu Änderungen der auf den Tauchkörper 4 wirkenden Gewichtskraft führen. Durch das Bereitstellen des Drucksensors 64 können diese Effekte kompensiert werden, so dass wiederum eine genaue Bestimmung des Füllstandes mittels des Tauchkörpers 4 ermöglicht ist.

Weiterhin ist in der Kraftmesszelle 3 beispielsweise ein Temperatursensor 66 vorgesehen, mittels welchem die Temperatur der Kraftmesszelle 3 bestimmt werden kann, um auf diese Weise eine Kompensation der Temperaturdrift der Kraftmesszelle 3 aufgrund des Einbringens der Temperatur beziehungsweise der Wärme- beziehungsweise Kälteenergie mittels des Füllprodukts zu ermöglichen. Entsprechend kann die Auswerteeinrichtung 30 dann ein temperaturkompensiertes und daher genaueres Füllstandsignal an eine übergeordnete Steuereinheit liefern.

Solange der Tauchkörper 4 derart aus einem Vollmaterial ausgebildet ist, dass dessen Gewicht größer ist, als das Gewicht des von ihm verdrängten Füllprodukts, kann die Anbindung zwischen Kraftmesszelle 3 und Tauchkörper 4 auch flexibel, beispielsweise über eine Schnur, einen Gurt oder ein Seil durchgeführt werden, so dass der Tauchkörper 4 entsprechend auch dann noch zuverlässig an der Kraftmesszelle 3 hängt, wenn er vollständig mit Füllprodukt überflutet ist.

In Figur 2 ist eine weitere Ausbildung der Vorrichtung 1 zum Bestimmen des Füllstandes eines Füllprodukts in einem Füllproduktreservoir 2 gezeigt. Die Kraftmesszelle 3 ist hier wiederum an einer Seitenwand 20 des Füllproduktreservoirs 2 angebunden, der Tauchkörper 4 steht nun jedoch von der Kraftmesszelle 3 aus nach oben. Die Kraftmesszelle 3 ist entsprechend vollständig mit Füllprodukt überflutet, bevor das Füllprodukt den Tauchkörper 4 überhaupt erreicht.

Die Kraftmesszelle 3 ist in der gezeigten Ausführungsform fluiddicht gekapselt und vollständig in das Füllprodukt eintauchbar.

Durch die fluiddichte, abgekapselte und in das Füllprodukt eintauchbare Kraftmesszelle 3 kann entsprechende eine beliebige Anordnung der Vorrichtung 1 innerhalb des jeweiligen Füllproduktreservoirs 2 erreicht werden. Die Anordnung der Vorrichtung 1 kann den jeweiligen geometrischen Verhältnissen der Füllproduktabfüllanlage entsprechend gestaltet werden.

Weiterhin ist es von Vorteil, sowohl den Tauchkörper 4 als auch die Kraftmesszelle 3 innerhalb des Füllproduktreservoirs 2 anzuordnen, da auf diese Weise ein hygienisches Design dahingehend ausgebildet werden kann, dass sämtliche Reinigungs- und Sterilisationsschritte, welchen das Füllproduktreservoir 2 unterworfen wird, auch zur Reinigung und Sterilisierung der Vorrichtung 1 mit ihren sämtlichen Komponenten dienen können. Damit kann erreicht werden, dass ein besonders hygienisches Design ermöglicht wird bei gleichzeitig exakter und zuverlässiger Messung des Füllstandes innerhalb des Füllproduktreservoirs.

In Figur 3 ist eine weitere Ausbildung der Vorrichtung 1 gezeigt, bei welcher die Anbindung der Kraftmesszelle 3 am Boden 22 des Füllproduktreservoirs 2 vorgenommen ist. Auch hierüber ergibt sich, dass eine besonders geometrisch einfache und den jeweiligen Verhältnissen angemessene und angepasste Anordnung der Vorrichtung 1 erreicht werden kann. Der Tauchkörper 4 steht in dieser Anordnung nach oben in das Füllproduktreservoir 2 hinein.

In Figur 4 ist die Anordnung derart, dass die Kraftmesszelle 3 an einem Deckel 24 des Füllproduktreservoirs 2 angebunden ist und der Tauchkörper 4 entsprechend in das Füllproduktreservoir 2 hineinhängt.

In Figur 5 ist noch eine weitere Ausbildung der Vorrichtung 1 gezeigt, wobei die Verbindung zwischen der Kraftmesszelle 3 und dem Tauchkörper 4 hier in einem mittleren Bereich des Tauchkörpers 4 durchgeführt wird. Der Tauchkörper 4 erstreckt sich entsprechend gegenüber der senkrecht zur Haupterstreckungsrichtung des Tauchkörpers 4 liegenden Anbindung an die Kraftmesszelle 3, welche beispielsweise wiederum über den starren Stab 5 erreicht wird, nach oben und nach unten etwa um die gleiche Länge.

Die in den vorliegenden Figuren gezeigten unterschiedlichen Anwendungsfälle und Anwendungsbeispiele der Vorrichtung zum Bestimmen des Füllstandes des Füllprodukts sind in Füllproduktreservoirs vorgesehen, welche als Tanks in Füllproduktabfüllanlagen vorgesehen sind, in Vorlaufgefäßen, in Bädern, wie sie beispielsweise für eine Verschlussdesinfektion in einer Füllproduktanlage vorgesehen sind, in einem Zentralkessel eines Füllproduktfüllers, in einem Rohrring-Behälter beziehungsweise einem Ringkessel ebenfalls eines Füllproduktfüllers.

### Bezugszeichen

- 1: Vorrichtung zum Bestimmen des Füllstandes eines Füllprodukts
- 2: Füllproduktreservoir
- 20: Seitenwand
- 22: Boden
- 24: Deckel
- 3: Kraftmesszelle
- 30: Auswerteeinrichtung
- 4: Tauchkörper
- 5: Stab
- 60: Voll-Sensor
- 62: Leer-Sensor
- 64: Drucksensor
- 66: Temperatursensor

## Patentansprüche

1. Vorrichtung (1) zum Bestimmen des Füllstandes eines Füllprodukts in einem Füllproduktreservoir (2) einer Füllproduktabfüllanlage, bevorzugt einem Getränkereservoir in einer Getränkeabfüllanlage, umfassend einen im Füllproduktreservoir (2) angeordneten Tauchkörper (4) zum Eintauchen in das Füllprodukt, eine mit dem Tauchkörper (4) verbundene Kraftmesszelle (3) zum Bestimmen der auf den Tauchkörper (4) wirkenden Gewichtskraft und eine Auswerteeinrichtung (30), die ein Füllstandssignal auf Grundlage der von der Kraftmesszelle (3) ermittelten Gewichtskraft bestimmt,
**dadurch gekennzeichnet, dass**
der Tauchkörper (4) vollständig aus einem Vollmaterial ausgebildet ist,
ein Voll-Sensor (60) zur Ermittlung, ob der Tauchkörper (4) vollständig in das Füllprodukt eingetaucht ist, und/oder ein Leer-Sensor (62) zur Ermittlung, ob der Tauchkörper (4) nicht in das Füllprodukt eingetaucht ist, vorgesehen ist, und
die Auswerteeinrichtung (30) dazu eingerichtet ist, auf Grundlage des Signals des Voll-Sensors (60) bzw. auf Grundlage des Signals des Leer-Sensors (62) das Füllstandssignal zu kalibrieren.

2. Vorrichtung (1) gemäß Anspruch 1, **dadurch gekennzeichnet, dass** der Tauchkörper (4) vollständig aus Edelstahl oder einem lebensmittelechten Kunststoff ausgebildet ist.

3. Vorrichtung (1) gemäß Anspruch 1 oder 2, **dadurch gekennzeichnet, dass** der Tauchkörper (4) ein hygienisches Design aufweist und bevorzugt glatte und/oder abgerundete und/oder konvexe Oberflächen aufweist.

4. Vorrichtung (1) gemäß einem der vorstehenden Ansprüche, **dadurch gekennzeichnet, dass** die Kraftmesszelle (3) fluiddicht gekapselt ist und in das Füllprodukt eintauchbar ist.

5. Vorrichtung (1) gemäß einem der Ansprüche 1 bis 3, **dadurch gekennzeichnet, dass** die Kraftmesszelle (3) mit der Umgebung außerhalb des Füllproduktreservoirs (2) in Fluidkommunikation steht.

6. Vorrichtung (1) gemäß einem der vorstehenden Ansprüche, **dadurch gekennzeichnet, dass** der Tauchkörper (4) starr mit der Kraftmesszelle (3) verbunden ist und der Tauchkörper bevorzugt über einen starren Stab (5) mit der Kraftmesszelle (3) verbunden ist.

7. Vorrichtung (1) gemäß Anspruch 6, **dadurch gekennzeichnet, dass** der starre Stab (5) den Tauchkörper (4) in einer vorgegebenen Ausrichtung hält und der Tauchkörper (4) bevorzugt zumindest teilweise, besonders bevorzugt vollständig oberhalb der Kraftmesszelle (3) gehalten ist.

8. Vorrichtung (1) gemäß einem der vorstehenden Ansprüche, **dadurch gekennzeichnet, dass** die Auswerteeinrichtung (30) dazu eingerichtet ist, die Daten eines Temperatursensors (66) zur Bestimmung der Temperatur der Kraftmesszelle (3) und/oder des Füllprodukts, und/oder die Daten eines Drucksensors (64) zur Bestimmung des über dem Füllprodukt im Füllproduktreservoir (2) anliegenden Drucks in die Bestimmung des Füllstandssignals einzubeziehen.

9. Vorrichtung (1) gemäß einem der vorstehenden Ansprüche, **dadurch gekennzeichnet, dass** die Auswerteeinrichtung (30) dazu eingerichtet ist, den Füllstand auf Grundlage einer Bestimmung der Gewichtskraft des Tauchkörpers (4) in Luft und einer vorgegebenen Dichte des Füllprodukts zu ermitteln.

10. Vorrichtung (1) gemäß einem der vorstehenden Ansprüche, **dadurch gekennzeichnet, dass** die Kraftmesszelle (3) an einer Seitenwand (20), an dem Boden (22) oder an einem Deckel (24) des Füllproduktreservoirs (2) angebracht ist.

## Claims

1. Device (1) for determining the filling level of a filling product in a filling product reservoir (2) of a filling product filling unit, preferably a beverage reservoir in a beverage filling unit, comprising an immersion body (4) arranged in the filling product reservoir (2) for immersion in the filling product, a load cell (3) connected to the immersion body (4) for determining the weight force acting on the immersion body (4), and an evaluation apparatus (30) that determines a filling level signal on the basis of the weight force detected by the load cell (3),
**characterised in that**
the immersion body (4) is made entirely of a solid material,
a full sensor (60) is provided for detecting the immersion body (4) being fully immersed in the filling product and/or an empty sensor (62) is provided for detecting the immersion body (4) not being immersed in the filling product, and
the evaluation apparatus (30) is adapted to calibrate the filling level signal on the basis of the signal of the full sensor (60) or on the basis of the signal of the empty sensor (62).

2. Device (1) according to claim 1, **characterised in that** the immersion body (4) is made entirely of stainless steel or a food-grade plastics material.

3. Device (1) according to claim 1 or 2, **characterised in that** the immersion body (4) has a hygienic design and preferably has smooth and/or rounded and/or convex surfaces.

4. Device (1) according to any one of the preceding claims, **characterised in that** the load cell (3) is encapsulated in a fluid-tight manner and can be immersed in the filling product.

5. Device (1) according to any one of claims 1 to 3, **characterised in that** the load cell (3) is in fluid communication with the environment outside the filling product reservoir (2).

6. Device (1) according to any one of the preceding claims, **characterised in that** the immersion body (4) is rigidly connected to the load cell (3) and the immersion body is preferably connected to the load cell (3) via a rigid rod (5).

7. Device (1) according to claim 6, **characterised in that** the rigid rod (5) holds the immersion body (4) in a predetermined orientation and the immersion body (4) is preferably held at least partially, particularly preferably completely, above the load cell (3).

8. Device (1) according to any one of the preceding claims, **characterised in that** the evaluation apparatus (30) is adapted to take into account the data of a temperature sensor (66) for determining the temperature of the load cell (3) and/or of the filling product, and/or the data of a pressure sensor (64) for determining the pressure applied over the filling product in the filling product reservoir (2) in the determination of the filling level signal.

9. Device (1) according to any one of the preceding claims, **characterised in that** the evaluation apparatus (30) is adapted to determine the filling level on the basis of a determination of the weight of the immersion body (4) in air and a specified density of the filling product.

10. Device (1) according to any one of the preceding claims, **characterised in that** the load cell (3) is attached to a side wall (20), to the base (22) or to a lid (24) of the filling product reservoir (2).

## Revendications

1. Dispositif (1) pour spécifier le niveau de remplissage d'un produit de remplissage dans un réservoir de produit de remplissage (2) d'une installation de distribution de produit de remplissage, préférentiellement d'un réservoir de boisson dans une installation de distribution de boisson, comprenant un corps d'immersion (4) agencé dans le réservoir de produit de remplissage (2) destiné à être immergé dans le produit de remplissage, une cellule dynamométrique (3) reliée au corps d'immersion (4) pour spécifier la force de pesanteur agissant sur le corps d'immersion (4), et un appareil d'évaluation (30), qui spécifie un signal de niveau de remplissage sur la base de la force de pesanteur déterminée par la cellule dynamométrique (3),
**caractérisé en ce que**
le corps d'immersion (4) est entièrement formé à partir d'un matériau plein,
un capteur de plein (60) est prévu pour déterminer si le corps d'immersion (4) est complètement immergé dans le produit de remplissage, et/ou un capteur de vide (62) est prévu pour déterminer si le corps d'immersion (4) n'est pas immergé dans le produit de remplissage, et
l'appareil d'évaluation (30) est conçu pour calibrer, sur la base du signal du capteur de plein (60) ou sur la base du signal du capteur de vide (62), le signal de niveau de remplissage.

2. Dispositif (1) selon la revendication 1, **caractérisé en ce que** le corps d'immersion (4) est entièrement réalisé en acier inoxydable ou en une matière plastique convenant à un usage alimentaire.

3. Dispositif (1) selon la revendication 1 ou 2, **caractérisé en ce que** le corps d'immersion (4) présente une conception hygiénique et présente préférentiellement des surfaces supérieures lisses et/ou arrondies et/ou convexes.

4. Dispositif (1) selon l'une quelconque des revendications précédentes, **caractérisé en ce que** la cellule dynamométrique (3) est encapsulée de manière étanche aux fluides et peut être immergée dans le produit de remplissage.

5. Dispositif (1) selon l'une quelconque des revendications 1 à 3, **caractérisé en ce que** la cellule dynamométrique (3) est en communication fluidique avec l'environnement extérieur du réservoir de produit de remplissage (2).

6. Dispositif (1) selon l'une quelconque des revendications précédentes, **caractérisé en ce que** le corps d'immersion (4) est relié de manière rigide à la cellule dynamométrique (3) et le corps d'immersion est relié préférentiellement par l'intermédiaire d'une tige rigide (5) à la cellule dynamométrique (3).

7. Dispositif (1) selon la revendication 6, **caractérisé en ce que** la tige rigide (5) maintient le corps d'immersion (4) dans une orientation prédéterminée et le corps d'immersion (4) est maintenu préférentiellement au moins partiellement, le plus préférentiellement complètement au-dessus de la cellule dynamométrique (3).

8. Dispositif (1) selon l'une quelconque des revendications précédentes, **caractérisé en ce que** l'appareil d'évaluation (30) est conçu pour intégrer les données d'un capteur de température (66) pour spécifier la température de la cellule dynamométrique (3) et/ou du produit de remplissage, et/ou les données d'un capteur de pression (64) pour spécifier la pression appliquée au produit de remplissage dans le réservoir de produit de remplissage (2) dans la spécification du signal de niveau de remplissage.

9. Dispositif (1) selon l'une quelconque des revendications précédentes, **caractérisé en ce que** l'appareil d'évaluation (30) est conçu pour déterminer le niveau de remplissage sur la base d'une spécification de la force de pesanteur du corps d'immersion (4) dans l'air et une densité prédéterminée du produit de remplissage.

10. Dispositif (1) selon l'une quelconque des revendications précédentes, **caractérisé en ce que** la cellule dynamométrique (3) est montée au niveau d'une paroi latérale (20), au niveau du fond (22) ou au niveau d'un couvercle (24) du réservoir de produit de remplissage (2).
